## Europäisches Patentamt
## European Patent Office
## Office européen des brevets

(19)

(11) Publication number: **0 055 116**
**B1**

(12) **EUROPEAN PATENT SPECIFICATION**

(45) Date of publication of patent specification: **04.03.87**

(21) Application number: **81306000.1**

(22) Date of filing: **21.12.81**

(51) Int. Cl.⁴: **F 02 D 41/30, F 02 M 69/04, F 02 M 57/02, F 02 M 51/04**

(54) **Fuel injection pump.**

(30) Priority: **22.12.80 US 219107**

(43) Date of publication of application:
**30.06.82 Bulletin 82/26**

(45) Publication of the grant of the patent:
**04.03.87 Bulletin 87/10**

(84) Designated Contracting States:
**DE FR GB**

(56) References cited:
**DE-A-2 356 335**
**DE-A-2 809 122**
**GB-A-1 601 006**
**GB-A-2 017 205**
**US-A-1 534 829**
**US-A-3 724 436**
**US-A-3 837 324**
**US-A-4 044 745**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Schechter, Michael Moses**
**27686 Sutherland**
**Southfield Michigan 48076 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

This invention relates to fuel injection pumps.

Fuel injection pumps are well known in the prior art. For example, US—A—3,990,413 shows a plunger type fuel injection pump with a delivery valve and a control means for varying the stroke of the plunger; however, these elements are not integrated into a single unit, there is no electromagnetic means for actuating the plunger, nor is the duration and magnitude of the fuel injector controlled electrically.

US—A—3,623,192 shows a fuel injection system in which fuel is pressurised behind a metering plunger to determine the length of time the plunger remains open. No electrical control is provided.

US—A—3,837,324 shows an integrated fuel injection assembly having a pump and nozzle assembly integrated, and solenoid means for controlling a fuel valve. However, two solenoids and associated control mechanisms are required.

US—A—4,044,745 shows an oscillating pump and an electromagnet, with stroke control means, but the actuating mechanism is not constructed in a compact manner, and the stroke control is not varied by controlling the pulses to an electromagnet.

GB—A—2017205 discloses a fuel pump comprising a shuttle movable in a cylinder, control means for controlling the flow of fluid to one end of said cylinder whilst the other end of said cylinder is in communication with a feed port, the rate of movement of said shuttle towards said one end of the cylinder being reduced as a feed passage moves out of register with the feed port and to movement of the shuttle ceasing as the feed port and feed passage moves out of register, measuring means for measuring the displacement of the shuttle which takes place whilst fuel is following from said one end of the cylinder and signed processing means responsible to the signal produced by said measuring means for adjusting said control means in the event that the quantity of fuel supplied to the injection pump differs from the desired quantity of fuel.

DE—A—2809122 discloses a fuel injection system comprising a fuel injector, a housing, a plunger, an electromagnetic plunger actuator, plunger stroke control means and a fuel inlet which is connected to a fuel supply source. The plunger is actuated by a solenoid armature. The plunger stroke control means comprises electrical means and adjustable means to vary the plunger intake stroke.

According to the present invention, there is provided a fuel injection pump comprising a fuel injector containing a pressure relief type valve, a plunger reciprocable in a pump housing, an electromagnetic actuator for the plunger, plunger stroke control means, an electrical control means for controlling the amount and duration of injection of fuel, said housing having a fuel inlet connected to a source of supply fuel at low pressure and having a check valve therein, the inlet being arranged adjacent one end of the plunger such that it is not covered by the plunger during its movement in the housing, the plunger being axially movable in one direction through a fuel intake stroke by the fuel under pressure from the inlet acting thereagainst, the plunger being secured to and axially aligned with the armature of a solenoid for unitary movement whereby energization of the solenoid by electrical impulses thereto effects a movement of the plunger in the opposite direction through a fuel pumping stroke to increase the fuel pressure in the inlet to a level effecting closing of the check valve and opening of the pressure relief type valve and an expulsion of fuel from the housing through said injector, said electrical control means being connected to the solenoid and providing a source of voltage to the solenoid that varies in accordance with a predetermined schedule of fuel flow and includes correction means to vary the voltage to the solenoid to adjust the plunger stroke and fuel injection to agree with the predetermined schedule, the plunger stroke control means including adjustable means to vary the length of the intake stroke of the plunger to thereby vary the volume of fuel inducted into the pump, the plunger stroke control means also including armature position sensing means located adjacent the armature and connected to the electrical control means providing a feed back control input signal to the correction means to enable the latter means to adjust the magnitude and duration of voltage to the solenoid to vary the magnitude and duration of fuel injection to conform the fuel flow to the predetermined schedule.

By mounting the plunger, solenoid and sensor means within a single housing, a compact construction is obtained.

Embodiments of the invention will now be described, by way of example only, with reference to the accompanying drawings, in which:—

Figure 1 is a cross-sectional view of a unit fuel injector assembly embodying the invention;

Figure 2 is a schematic block diagram representation of the control logic for the pump plunger stroke; and

Figure 3 is a cross-sectional view of another embodiment of the invention.

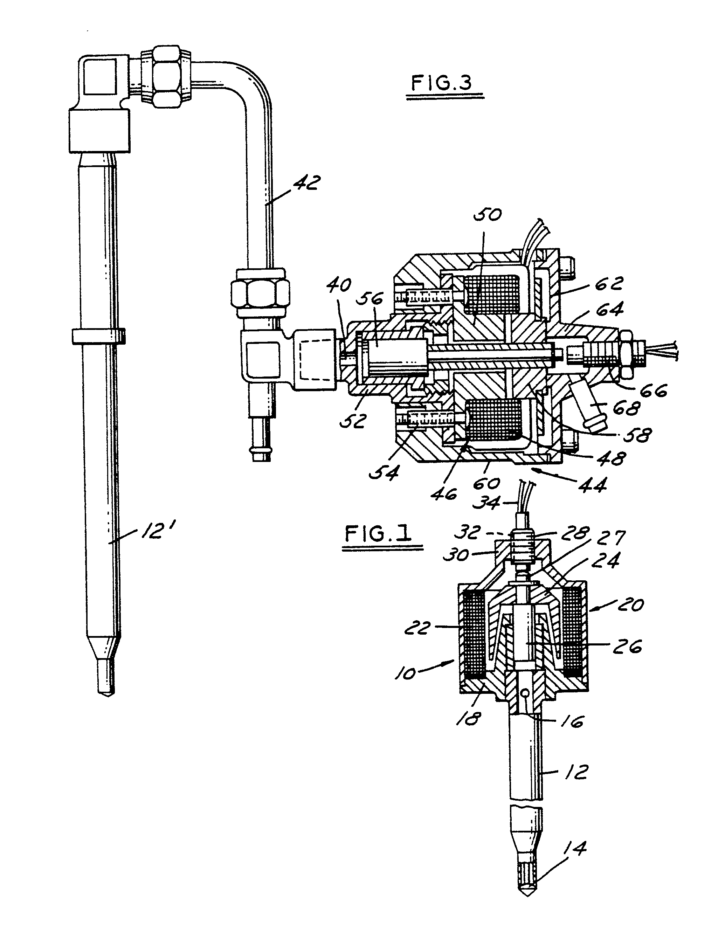

Figure 1 shows a fuel injection pump 10. The pump 10 is formed by a three-piece housing. The first portion of the housing comprises a conventional longitudinally extending fuel injector nozzle 12 having an outlet at its lower end which contains a fuel pressure actuated valve 14 that opens outwardly when the fuel pressure at the outlet reaches a sufficient level. The details of construction of this particular injector nozzle are not given since they are known and believed to be unnecessary for an understanding of the invention. Suffice it to say that it could be constructed as fully shown and described in US—A—3,542,293 with a tension spring unit for maintaining the valve closed below a predetermined fuel pressure.

The fuel injector nozzle 12 at its upper end contain a fuel inlet 16 that is connected to a suitable low pressure fuel supply line, not shown. A check valve and a pressure regulator are included in the line to permit entry of fuel into inlet 16 at a maintained pressure level, and to ensure closure of the inlet after actuation of the fuel injection pump to prevent leakage of fuel out of the supply line.

The second portion of the housing of fuel injector pump 10, which is mounted at one end of the nozzle 12 forms a stationary core 18 of a solenoid 20. It includes a coil 22 surrounding a reciprocable armature 24 that is secured to the upper end of a plunger 26 to constitute a fuel pumping unit. The plunger 26 is coaxial with the nozzle 12 and has a projection 27 adapted to engage an adjustable stop 28 that is threaded coaxially with the plunger 26 through a cover 30 for coil 22. The cover 30 forms the third portion of the housing of the fuel injection pump 10, and is mounted on the opposite end of the core 18 from the nozzle 12. The stop 28 is hollow and contains a proximity sensor 32 connected by wiring 34 to an electrical control unit, not shown.

The pumping action in this case is caused and controlled by the magnetic force generated in the solenoid coil 22. The quantity of fuel displaced by plunger 26 is determined by the magnitude and duration of the current pulse in the coil 22, while the timing of injection is defined by the timing of the pulse. In a multi-cylinder engine, there would be a separate fuel injection pump for each cylinder.

The fuel injection pump 10 is intended to be controlled by a data processing and computing device, such as a microprocessor, which would continuously monitor the main operating conditions of the engine, such as airflow, EGR flow, RPM, coolant and fuel temperatures, for example, compute the required fuel delivery and injection timing, and generate and send out to all the fuel injection pumps 10 current pulses of such magnitude and duration, and with such timing as needed to produce the required stroke of the plunger 26 at the required instant. In addition, the microprocessor would also monitor the actual stroke of the fuel pumping plunger serving the invididual engine cylinders. Whenever the measurement of an actual plunger stroke indicated an excess or deficiency in the quantity of fuel injected into an individual cylinder, the correction device/portion of the microprocessor would modify the current pulse sent to the corresponding solenoid 20 until the required plunger stroke was achieved. Independent control of the fuel quantities injected into individual cylinders would assure the ability to maintain the required pattern of uniform cylinder-to-cylinder fuel distribution.

Since the stroke of plunger 26 is determined by both the magnitude of the magnetic force impulse and its duration, the same plunger stroke can be achieved with a variety of impulses with different combinations of force and its duration, as long as the total energy of the impulses is the same. Thus, a substantial degree of freedom exists to vary the rate of fuel injection. For every engine speed and load combination, therefore, the microprocessor could select an impulse with offered the best compromise between the most desirable rate of injection in terms of fuel flow per millisecond and the desirable duration of injection expressed in crankshaft degrees.

In operation, fuel enters the fuel inlet 16 through a suitable check valve, and, when coil 22 is not energised, fuel pressure keeps the plunger 26 in its uppermost position pressed against the adjustable stop 28. Adjusting the stop will calibrate the air gap in the solenoid. Energising the coil 22 drives the plunger downward, thus pressurising the fuel trapped in the body of nozzle 12 until the opening pressure of the valve is reached, and the valve 14 opens to allow fuel to be injected into the cylinder. When the coil 22 is deenergised, fuel pressure stops the downward movement of plunger 26 and the injection is terminated. Since the mass of plunger 26 is small in comparison with the magnitude of the pressure force, the deceleration of the plunger is very fast and results in a sharp cut-off of injection. For even faster injection cut-off, a plunger return spring may be incorporated in the design. Expansion of the compressed fuel (and return spring, if any) moves the plunger up until the pressure drops below the supply pressure and the inlet check valve opens, letting in the supply fuel. The cycle ends with the nozzle 12 refilled with fuel and the plunger up against the adjustable stop 28, ready for the next injection stroke.

The interior of the coil 22 is vented through an opening (not shown) into an intake air duct leading to the engine air intake throttle. Therefore, any fuel leaking past the plunger 26 evaporates, and mixed with the intake air, will find its way into the cylinders. As a result, the fuel delivery into the cylinder is essentially independent of the leakage and equals the displaced volume less the compression volume.

No retraction valve is needed in this design since the small volume of fuel subjected to compression makes the fuel delivery insensitive to variations in the cylinder backpressure. It is estimated that if the injector volume is 600 mm$^3$, a 4137 kPa, (330psi) increase in pressure subtracts about 2.5 mm$^3$ from the volume of the fuel. Therefore, a 413.7 kPa (60 psi) change in cylinder backpressure will change the fuel delivery only one-half of a cubic millimeter.

If all the fuel injection pumps 10 for all the engine cylinders were identical in every respect, identical impulses would produce identical plunger strokes in all of them. In reality, however, due to inevitable minor differences, for example in inertial masses, frictions, solenoid coils and air gaps, plunger strokes in different units may not be quite the same, thus leading to uneven cylinder-to-cylinder fuel distribution. To assure uniform fuel distribution, the impulses sent to different unit injectors are individually tailored to each of them to assure equal plunger strokes of required length in all of them. For this, the microprocessor must receive information on actual plunger stroke in each unit to correct for any discrepancies.

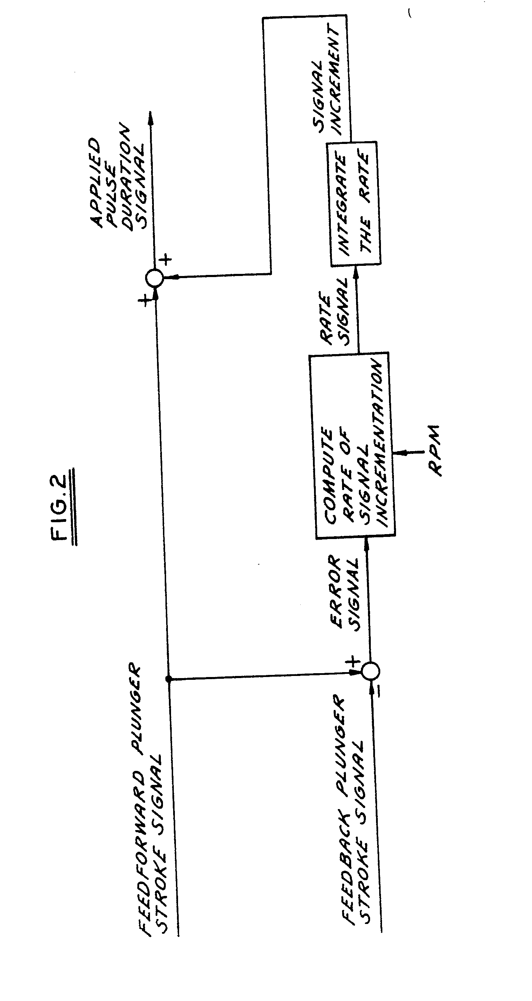

The signals from the proximity sensor 32 are fed into the microprocessor, not shown, and permit the latter to evaluate the actual plunger stroke, compare it with the required one, and modify, if necessary, the current impulse sent to coil 22, until the actual stroke matches the required one. Figure 2 shows the logic diagram for the closed loop plunger stroke control system. The feed forward signal is generated by the microprocessor on the basis of information it received from various engine sensors and is computed as a function of inter alia, the airflow, engine speed and coolant temperature according to a predetermined schedule, stored in the microprocessor memory. This basic signal, which defines a certain pulse duration and is the same for all unit injectors in the engine, represents a demand for a specific plunger stroke. The feedback signal, which is supplied by the position sensor 32, represents the actual plunger stroke during the last engine cycle. If the actual stroke equals the required one, the two signals are equal, and the error signal is zero. Whenever the plunger stroke differs from the required value, an error signal appears in the system, and the microprocessor begins to correct the stroke by incrementing the pulse duration so as to bring the error signal close to zero. The rate at which the pulse duration signal is incremented is a function of both the magnitude of the error signal and engine speed.

Integration of the rate in terms of real time produces the pulse duration signal increment which is added to the basic feedforward signal, thus modifying the applied pulse duration signal. Modification of the applied signal continues until the required value of the plunger stroke is achieved. At that time, the error signal becomes zero, or close to it, the pulse duration signal increment becomes constant, and the system achieves stable condition. As a result, with a matched set of plunger position sensors in the engine, the microprocessor sends to each solenoid 20 current pulses of individually tailored duration which assure correct and equal plunger strokes in all unit injectors.

Figure 3 illustrates a further embodiment of the invention. In this case, the injector nozzle 12' is not integrated with the housing in an end-to-end relationship, as shown in Figure 1, but is remotely located and connected to the outlet 40 of the housing by tubing 42. The fuel injection pump, indicated generally at 44, is, however, constructed generally in a manner similar to that shown in Figure 1. It contains a solenoid 46 that includes a coil 48 surrounding a stationary core element 50. The latter is adjustably fixed to a lower housing portion 52 by screws 54. The lower housing portion 52 defines the fuel outlet 40. A plunger 56 is fixed to the movable armature 58 of the solenoid 46. The solenoid 46 is enclosed by an upper housing portion 60 and a cover 62. The latter has a raised boss 64 that provides a fixed stop for the upward movement of armature 58. A proximity sensor 66 projects through cover 62 adjacent the armature and is mounted coaxially with the plunger 56. A vent line 68 is provided to collect fuel leakage past the armature 58.

**Claims**

1. A fuel injection pump comprising a fuel injector (12) containing a pressure relief type valve (14), a plunger (26) reciprocable in a pump housing, an electromagnetic actuator for the plunger, plunger stroke control means (28), an electrical control means for controlling the amount and duration of injection of fuel, said housing having a fuel inlet (16) connected to a source of supply fuel at low pressure and having a check valve therein, the inlet (16) being arranged adjacent one end of the plunger (26) such that it is not covered by the plunger during its movement in the housing, the plunger being axially movable in one direction through a fuel intake stroke by the fuel under pressure from the inlet acting thereagainst, the plunger (26) being secured to and axially aligned with the armature (24) of a solenoid (20) for unitary movement whereby energization of the solenoid (20) by electrical impulses thereto effects a movement of the plunger (26) in the opposite direction through a fuel pumping stroke to increase the fuel pressure in the inlet (16) to a level effecting closing of the check valve and opening of the pressure relief type valve (14) and an expulsion of fuel from the housing through said injector (12), said electrical control means being connected to the solenoid (20) and providing a source of voltage to the solenoid (20) that varies in accordance with a predetermined schedule of fuel flow and includes correction means to vary the voltage to the solenoid to adjust the plunger stroke and fuel injection to agree with the predetermined schedule, the plunger stroke control means including adjustable means (28) to vary the length of the intake stroke of the plunger (26) to thereby vary the volume of fuel inducted into the pump, the plunger stroke control means also including armature position sensing means (32) located adjacent the armature (24) and connected to the electrical control means providing a feed back control input signal to the correction means to enable the latter means to adjust the magnitude and duration of voltage to the solenoid to vary the magnitude and duration of fuel injection to conform the fuel flow to the predetermined schedule.

2. A fuel injection pump according to Claim 1, wherein the plunger and sensor means are coaxially located on the longitudinal axis of the fuel injector in an end to end relationship with the fuel injector to provide a compact unitary assembly.

3. A fuel injection pump according to Claim 2, wherein the housing comprises a first longitudinally extending portion containing the fuel injector, and a second portion mounted at one

7 **0 055 116** 8

end on the first portion and containing the solenoid and the plunger arranged for reciprocation in the longitudinal direction, and a third portion mounted on the opposite end of the second portion and containing the adjustable means, the sensor means being integrated with the adjustable means.

**Patentansprüche**

1. Kraftstoff-Einspritzpumpe, bestehend aus einem Kraftstoff-Einspritzer (12) mit einem Druckbegrenzungsventil (14), einem in einem Pumpengehäuse hin- und herbeweglichen Kolben (26), einem elektromagnetischen Stellorgan für den Kolben, Kolbenhub-Regelvorrichtungen (28) und einer elektrischen Regelvorrichtung zur Regelung der Menge und Dauer der Kraftstoffeinspritzung, wobei das erwähnte Gehäuse über einen Kraftstoffeinlass (16), der an eine Niederdruck-Kraftstoffzufuhrquelle mit eingebautem Rückschlagventil angeschlossen ist, verfügt, der neben einem Ende des Kolbens (26) angeordnet ist, sodass er von dem Kolben während dessen Bewegung im Gehäuse nicht verdeckt wird, wobei der Kolben durch den vom Einlass unter Druck stehenden und gegenwirkenden Kraftstoff durch einen Kraftstoff-Einlasshub axial in einer Richtung bewegt werden kann, der Kolben (26) aus Gründen einer einheitlichen Bewegung mit dem Anker (24) eines Tauchmagneten (20) fest verbunden und axial zu diesem ausgerichtet ist, wobei die Erregung des Tauchmagneten (20) durch elektrische Impulse eine Bewegung des Kolbens (26) in entgegengesetzter Richtung durch einen Kraftstoff-Einlasshub bewirkt, um im Einlass (16) den Kraftstoffdruck derart anzuheben, dass hierdurch das Rückschlagventil geschlossen, das Druckbegrenzungsventil (14) geöffnet und Kraftstoff aus dem Gehäuse durch den erwähnten Einspritzer (12) ausgetrieben wird, wobei die erwähnte elektrische Regelvorrichtung an den Tauchmagneten (20) angeschlossen ist, den Tauchmagneten (20) mit einer in Abhängigkeit von einem festgelegten Kraftstoff-Durchflussplan veränderlichen Spannung versorgt und eine Berichtigungsvorrichtung zur Änderung der Spannung zum Tauchmagneten enthält, um den Kolbenhub und die Kraftstoffeinspritzung mit dem festgelegten Plan in Einklang zu bringen, wobei die Regelvorrichtung für den Kolbenhub eine einstellbare Vorrichtung (28) enthält, um die Länge des Einlasshubs des Kolbens (26) zu ändern, wobei sich die Raummenge des in die Pumpe eingesaugten Kraftstoffes ändert, wobei die Regelvorrichtung für den Kolbenhub auch eine Ankerstellung und eine neben dem Anker (24) befindliche Abtastvorrichtung (32) enthält, und an die elektrische Regelvorrichtung angeschlossen ist, die ein Rückführungs-Steuereingangssignal zur Berichtigungsvorrichtung erzeugt, damit diese Vorrichtung die Höhe und Dauer der Spannung zum Tauchmagneten einstellen und so den Umfang und die Dauer der Kraftstoffeinspritzung anpassen kann, damit der Kraftstoffstrom dem festgelegten Plan entspricht.

2. Kraftstoff-Einspritzpumpe nach Anspruch 1, bei der der Kolben und die Abtastvorrichtung koaxial auf der Längsachse des Kraftstoff-Einspritzers in einem Verhältnis Ende an Ende zu dem Kraftstoffeinspritzer angebracht sind, um eine geschlossene Baugruppe zu bilden.

3. Kraftstoff-Einspritzpumpe nach Anspruch 2, bei der das Gehäuse aus einem ersten, sich in Längsrichtung erstreckenden Stück, das den Kraftstoff-Einspritzer enthält, aus einem zweiten Stück, das an einem Ende des ersten Stückes befestigt ist und den Tauchmagneten nebst Kolben enthält, die in einer Weise angeordnet sind, dass sie sich in Längsrichtung hin- und herbewegen können, sowie aus einem dritten Stück besteht, das am gegenüberliegenden Ende des zweiten Stückes befestigt ist und die Einstellvorrichtung enthält, wobei die Abtastvorrichtung in die Einstellvorrichtung eingebaut ist.

**Revendications**

1. Pompe d'injection de carburant comprenant un injecteur de carburant (12) comportant une vanne (14) d'un type de sécurité, un plongeur (26) pouvant effectuer un mouvement alternatif dans un carter de la pompe, une commande électromagnétique pour le plongeur, des moyens (28) de réglage de la course du plongeur, des moyens de réglage électriques pour ajuster le volume et la durée de l'injection de carburant, ledit carter présentant une entrée (16) de carburant reliée à une source de carburant d'alimentation à basse pression et comprenant une vanne de contrôle, l'entrée (16) étant disposée à proximité d'une extrémité du plongeur (26) de telle façon qu'elle ne soit pas couverte par le plongeur pendant son mouvement dans le carter, le plongeur étant mobile axialement dans une première direction en une course d'admission de carburant sous l'effet du carburant sous pression provenant de l'entrée qui agit contre lui, le plongeur (26) étant fixé et axialement aligné avec l'armature (24) d'un solénoïde (20) pour se déplacer avec celui-ci, l'excitation du solénoïde (20) par des impulsions électriques qui lui sont appliquées entraînant de ce fait un mouvement du plongeur (26) dans la direction opposée en une course de pompage de carburant afin d'augmenter la pression du carburant dans l'entrée (16) jusqu'à un niveau provoquant la fermeture de la vanne de contrôle et l'ouverture de la vanne (14) de sécurité ainsi qu'une expulsion de carburant hors du carter à travers ledit injecteur (12), lesdits moyens de réglage électriques étant raccordés au solénoïde (20) et constituant pour le solénoïde (20) une source de tension qui varie conformément à un programme prédéterminé de débit du carburant et qui comporte des moyens de correction permettant de faire varier la tension appliquée au solénoïde afin d'ajuster la course du plongeur et l'injection de carburant pour respecter le programme prédéterminé, les moyens de réglage de la course du plongeur comportant des moyens réglables (28) pour faire varier la longueur de la course d'admission du plongeur (26) afin de faire varier ainsi le volume de carburant introduit dans la pompe, les moyens de réglage de la course du plongeur comportant également des moyens (32) de détection de la position de l'armature situés à proximité de l'armature (24) et raccordés aux moyens de réglage électriques fournissant un signal d'entrée de réglage à contre-réaction aux moyens de correction pour permettre à ces derniers moyens d'ajuster la grandeur et la durée de la tension appliquée au solénoïde pour faire varier le volume et la durée de l'injection de carburant afin de conformer le débit de carburant au programme prédéterminé.

2. Pompe d'injection de carburant suivant la revendication 1, dans laquelle le plongeur et les moyens de détection sont disposés coaxialement sur l'axe longitudinal de l'injecteur de carburant, bout à bout avec l'injecteur de carburant, de façon à former un ensemble unitaire compact.

3. Pompe d'injection de carburant suivant la revendication 2, dans laquelle le carter comporte une première portion, s'étendant en direction longitudinale, contenant l'injecteur de carburant, une deuxième portion montée à une extrémité de la première portion et contenant le solénoïde et le plongeur agencés pour effectuer un mouvement alternatif dans la direction longitudinale, et une troisième portion montée à l'extrémité opposée de la deuxième portion et contenant les moyens réglables, les moyens de détection faisant partie intégrante des moyens réglables.

FIG.3

FIG.1

FIG.2